Europäisches Patentamt

(19) European Patent Office

Office européen des brevets

(11) Publication number: **0 092 047**
A2

(12) # EUROPEAN PATENT APPLICATION

(21) Application number: 83102433.6

(22) Date of filing: 11.03.83

(51) Int. Cl.³: **G 01 K 11/20**

(30) Priority: 12.03.82 US 357645
25.02.83 US 468189

(71) Applicant: **LUXTRON CORPORATION, 1060 Terra Bella Avenue, Mountain View California 94043 (US)**

(43) Date of publication of application: 26.10.83
Bulletin 83/43

(72) Inventor: **Alves, Ronald V., Dr., 475 Marion Avenue, Palo Alto, Cal. 94301 (US)**

(84) Designated Contracting States: **AT BE CH DE FR GB IT LI LU NL SE**

(74) Representative: **Reinländer & Bernhardt Patentanwälte, Orthstrasse 12, D-8000 München 60 (DE)**

(54) Multiplexing and calibration techniques for optical signal measuring instruments.

(57) An optical temperature measuring instrument for detecting illuminescense of phosphor temperature sensing elements, wherein a two or more point temperature calibration system allows compensating for different temperature sensor characteristics, and a single optical system is utilized for simultaneously reading the temperatures of a plurality of temperature sensors in a multiplexing arrangement.

- 1 -

## MULTIPLEXING AND CALIBRATION TECHNIQUES FOR
## OPTICAL SIGNAL MEASURING INSTRUMENTS

This invention relates generally to the acquisition and processing of optical signals derived from measuring transducers, utilized, for example, in an electro-optic instrument that detects and displays temperature from an optical temperature transducer.

Many particular techniques have been suggested for optically measuring the temperature of an object or an environment. A material that exhibits a change in some optical property is either applied directly to the object or made as part of a temperature probe, such as a probe formed on the end of an optical fiber. One such material is a phosphor that exhibits some change in its light emission as a function of its temperature in response to appropriate radiation excitation. Measuring the decay time of a phosphor emission after a pulse of exciting radiation, and the measurement of phosphor emission color shift as a function of temperature are two such methods that are described in United States Patent No. 4,223,226-Quick et al. (1980). A decay time technique is also disclosed in U.S. Patent No. 4,245,507-Samulski (1981).

Other techniques utilize varying phosphor emission intensity as a function of temperature. The emission intensity is measured as an indicator of phosphor temperature. One particular form of the intensity measuring technique having many advantages is described in United States Patent Nos. 4,075,493-Wickersheim (1978) and 4,215,275-Wickersheim (1980), assigned to Luxtron Corporation, the assignee of the present application. These patents show as a preferred technique the use of a phosphor which, when excited to luminescence, emits detectable radiation within two or more distinct wavelength ranges that are optically isolatable from one another, the relative intensity of emission in these wavelength ranges varying in a known manner as a function of the temperature of the phosphor. The preferred phosphor is one that emits sharp lines of radiation upon excitation, such as those having rare earth activators. A temperature measuring system utilizing such a phosphor preferably takes the ratio of emissions within two optically separable emission bands, and it is the ratio that is a function of the temperature of the phosphor. Ratioing minimizes many sources of error in the measurement, such as changes in the excitation source intensity, phosphor characteristics over time, or changes in the optical transmission system, such as an optical fiber, that communicates the phosphor emission to a detecting instrument.

Various approaches to optical temperature measurement are discussed in a published paper, which includes a description of an instrument sold by Luxtron Corporation, "Recent Advances in Optical Temperature Measurement", Wickersheim and Alves, Industrial Research/Development, December, 1979. The Luxtron instrument that has been marketed for some time utilizes an optical assembly positioned between an end of an optical fiber probe assembly and two detectors. These optics select two different groups of emission lines of the phosphor temperature sensor and direct the emission of one group of lines to one of the detectors and the other group of lines to the other of the detectors. These same optics direct ultraviolet radiation of a different wavelength into the optical fiber for exciting to emission the phosphor temperature sensor at the other end.

0092047

- 3 -

It is an object of the present invention to provide such an instrument with improved ease of accurate calibration.

It is another object of the present invention to provide an electro-optical instrument for use with a phosphor detector, particularly when the detector is provided at the end of a length of optical fiber, that converts the phosphor radiation emission to an accurate indication of the temperature of the phosphor.

It is a further object of the present invention to provide an optical temperature measuring instrument with improved accuracy in calibration for use in various temperature sensors that have slightly different temperature/emission characteristics.

It is yet another object of the present invention to provide optical multiplexing techniques for simultaneously handling multiple temperature sensors.

It is still another object of the present invention to provide multiplexing and calibration techniques that are advantageous in acquiring a wide variety of optical signals originating from various types of transducers that measure temperature, pressure, flow, stress, strain and similar parameters.

These and additional objects are accomplished by the various aspects of the present invention wherein briefly, according to one aspect, multiplexing is provided for the simultaneous acquisition of several independent optical signals. Many measuring applications require readings to be taken substantially simultaneously at two or more locations. An improved structure for handling multiple optical signals is to physically group them together in a small bundle, such as by grouping together ends of optical fibers, and then to image these signals onto multiple individual detectors by common optical elements; that is, the multiple optical signals are imaged as one image onto multiple individual detectors from which electrical signals are independently obtained. An optional integrating sphere is used to provide exciting radiation to multiple transducers at the end of optical fibers, in those applications requiring exciting radiation such as with phosphor temperature transducers.

According to another aspect of the invention, multiple point calibration is provided in order to be able to use interchangeably with the instrument various transducers, such as phosphor temperature sensors, that may have slightly different characteristics, a method of calibrating the instrument at two or more points is utilized. This is particularly advantageous when low cost, disposable temperature sensors are used. The calibration is accomplished, according to one alternative technique, by correcting the temperature signal from a particular temperature sensor to conform to the signal/temperature data permanently stored in a look-up table within the instrument. Once the correction factors are determined at each of two or more known temperatures, the temperature signal is modified prior to converting through the look-up table into temperature. Another calibration technique is to modify the look-up table for each probe without modifying the signals.

Additional features, objects and advantages of the various aspects of the present invention will become apparent from the following detailed description of preferred embodiments thereof. The various aspects of the present invention are explained as improvements in the luminescent intensity ratioing technique of the

0092047

- 5 -

Luxtron Corporation instruments but it should be understood that the various aspects of the present invention are equally applicable to temperature measuring instruments operating by the luminescent decay time and frequency shift detecting techniques, as well as to other optical measuring techniques for temperature and other parameters such as pressure, flow, stress, strain, etc. The improvements herein are also applicable to infra-red imaging techniques of the type described in U.S. Patent No. 4,061,578-Kleinerman (1977).

In the following, the various aspects of the invention will be explained in more detail with reference to the accompanying drawings, in which:

Figure 1 is a top view of a portion of an instrument in which the various aspects of the present invention are embodied, with certain portions cut away to show the optical system therein;

Figure 2 is a schematic representation of the optical system of Figure 1, and in addition shows schematically the electronic system that operates with the optical elements;

Figure 3 shows in sectional view a temperature calibrating well of the instrument of Figures 1 and 2;

Figure 4 shows in side view a technique for optically processing multiple sensor signals;

Figure 5 is a view of the optical system of Figure 4 taken at section 5-5 thereof;

Figure 6 is a view of the optical system of Figure 4 taken at section 6-6 thereof.

Figure 7 shows in side view a technique for providing excitation radiation to a plurality of optical fibers;

Figure 8 is a view of the optical system of Figure 4 taken at section 8-8 thereof;

- 6 -

Figure 9 shows an alternative technique for providing illumination to multiple fibers;

Figure 9A illustrates another variation of a system according to Figures 4-7;

Figure 10 shows curves of various sensor characteristics to illustrate one calibration technique; and

Figures 11, 12 and 13 show curves of various sensor characteristics to illustrate an alternative calibration technique.

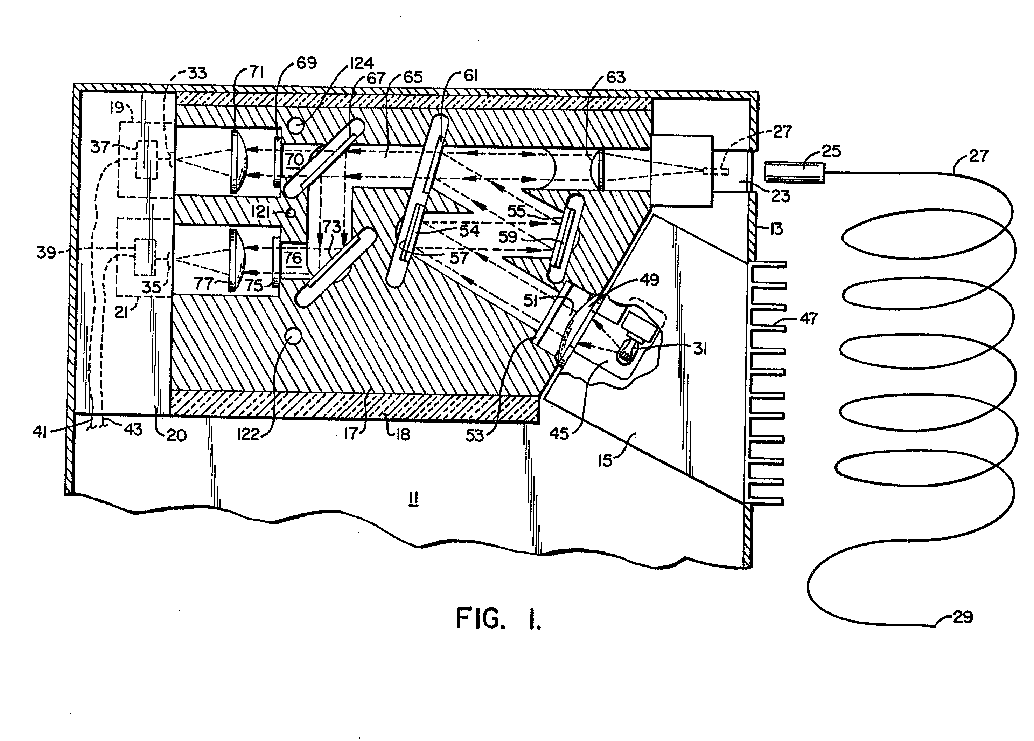

Referring initially to Figure 1, certain portions of a complete optical temperature measuring instrument that utilize the various aspects of the present invention are shown. An instrument housing 11 includes upright sides, such as a back wall 13. Inside the overall instrument housing is a light source housing block 15, an optical housing 17, detector assemblies 19 and 21, and an optical fiber connector receptacle 23. A standard type of available optical fiber connector 25 is attached to a length 27 of a single optical fiber, although a bundle of optical fibers could be used as well. The optical housing 17 is surrounded by a layer 18 of insulation and is maintained at a uniform temperature by heaters 122 and 124 that are controlled by a thermocouple 121.

At a free end 29 of the optical fiber 27 is an optical temperature sensor. The sensor includes a small amount of phosphor material attached to the end of an optical fiber and encapsulated, the details of which are disclosed in the aforementioned Wickersheim patents. Alternatively, the luminescent signal can be obtained from phosphor spaced a distance from the optical fiber end but optically coupled with the end. For the specific example of an instrument being described herein, the phosphor utilized is europium-doped lanthanum oxysulfide. This rare-earth phosphor is excited by passing ultraviolet radiation from the instrument down the optical fiber 27. Visible radiation emitted from the phosphor is then passed back along the optical fiber 27 to the instrument. Two groups of sharp emission lines are, in this specific example, utilized by the instrument to determine the temperature of the phosphor sensor 29. These groups include red lines around 7043 angstroms and yellow lines around 5860 angstroms. The emission intensity in these lines vary independently of each other as a function of phosphor temperature. The ratio of these intensities varies in a known way as a function of temperature.

The connector 25, when captured by the receptacle 23 that is accessible from the rear of the instrument, places the optical fiber 27 in optical communication with the instrument. A light source 31 provides the phosphor exciting ultraviolet radiation. Ultraviolet radiation is preferred for the particular embodiment being described but other radiation bands could be selected for this and other embodiments. For example, longer wavelengths such as blue or green are appropriate exciting rasiation for very long optical fibers. Visible exciting radiation is also advantageously used when fluorescence of plastic optical elements excited by ultraviolet radiation is a problem. The optics within the housing 17 selects the red emission lines and applies it to a photodetector 33. Similarly, the optics selects the yellow emission lines and applies it to a detector 35. An electrical signal from each of these detectors that is proportional to the intensity of the light striking them within their respective restricted wavelength ranges, is amplified by individual pre-amplifiers 37 and 39 whose amplified outputs appear in circuits 41 and 43, respectively. Each of the preamplifier and detector units are preferably formed as a unitary structure that is shielded from interference by stray fields.

The optics for the source radiation will now be described. A quartz lens 49 takes the light emitted from the small filament of the bulb 31 and collimates it into a beam 51 that is initially passed through a filter 53 that is designed to block all but the excitation frequencies, in this specific example being within the ultra-violet range. In order to further eliminate radiation outside the ultraviolet range, particularly the radiation to which the detectors are sensitive, the beam is reflected off three dichroic mirrors 54, 55 and 61 held in tandem. These mirrors are selected to be highly reflective to excitation radiation while allowing the detected wavelengths to pass through them. Absorbing coatings 57 and 59 are applied to the back of two of these mirrors. The excitation light is then reflected from the third dichroic mirror 61 to a quartz lens 63 that focuses the collimated beam onto the end of the optical fiber 27 that is positioned within the receptacle 23.

The optical system for the visible radiation that enters from the optical fiber 27 will now be described. The mirror 61 and lens 63 are common both to the return fluorescence light path and the excitation radiation path. The lens 63 takes the light at the end of the optical fiber 27 and collimates it, directing the collimated beam against the mirror 61. The dichroic mirror 61 is chosen to have a crossover wavelength such that it is highly reflective to the ultraviolet source radiation but highly transmissive to the visible radiation, thereby resulting in the visible fluorescent radiation passing through it as a beam 65. The dichroic mirror 61 thus also acts as a filter, reflecting any ultra-violet radiation back to the source and keeping it from reaching the detector region.

The radiation beam 65 contains the full spectrum of visible fluorescent radiation from the phosphor temperature sensor. Since only narrow wavelength ranges are of interest, additional optical elements are provided to separate the wavelengths of interest from the broad visible spectrum in the beam 65. A dichroic mirror 67 is selected in this particular example to transmit through a filter 69 and a lens 71 the red emission lines of interest to the detector 33. The dichroic mirror 67 is selected to reflect the yellow emission lines of interest onto a regular mirror 73 and thence through a filter 75 and then focused by lens 77 on the small area detector 35. The filters 69 and 75, respectively, are designed to pass a narrow bandwidth of the red and yellow emission lines of interest.

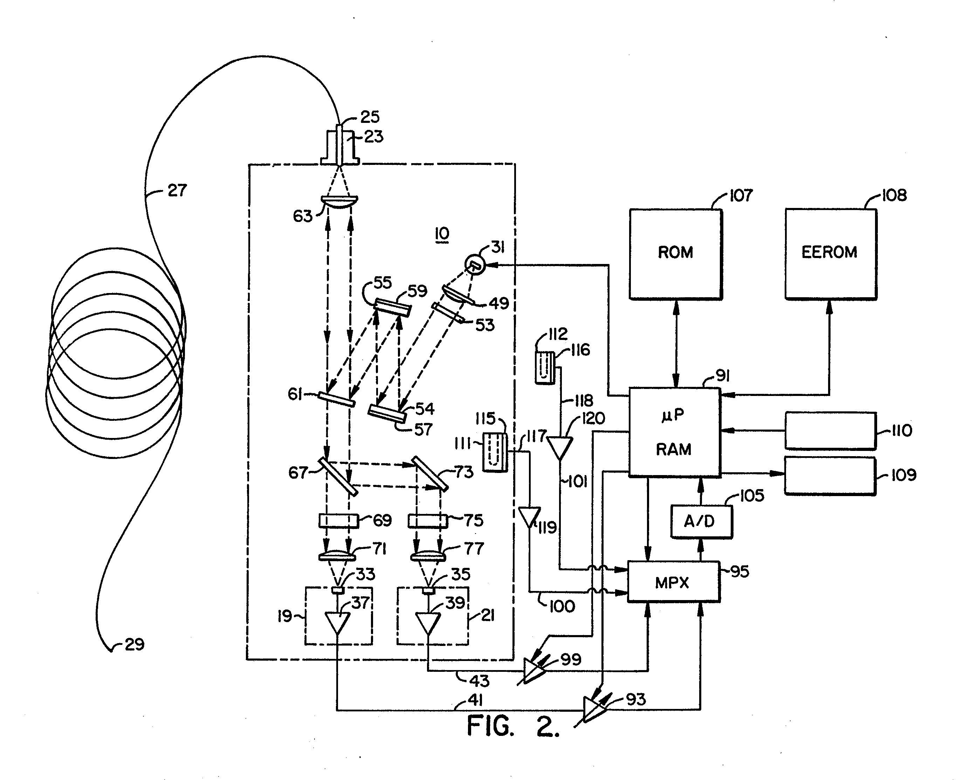

Referring to Figure 2, an electronic system is illustrated in general terms that cooperates with the optical system described to process the information from it and to control its operation. A ratio is taken of the analog signal levels in the circuits 41 and 43, and it is that ratio that is related to the temperature of the phosphor in the sensor 29 in a known way. There are many standard ways of implementing an electronic system for taking the ratio and converting to an equivalent temperature. A simple analog system could be utilized or it could even be done by hand if the voltage levels in the circuits 41 and 43 were independently measured. But with the current sophistication in digital electronics and the wide availability of circuit chips makes a digital implementation preferred. Further, the use of a microprocessor 91 as a central controlling element of the system is desired.

The signal voltage in the circuit 41 is amplified by amplifier 93 which has a variable gain. The output of that amplifier is applied directly to a digital multiplexer 95; similarly, the other circuit 43 is applied to an input of a variable gain amplifier 99 whose output is applied directly as another input to the multiplexer 95.

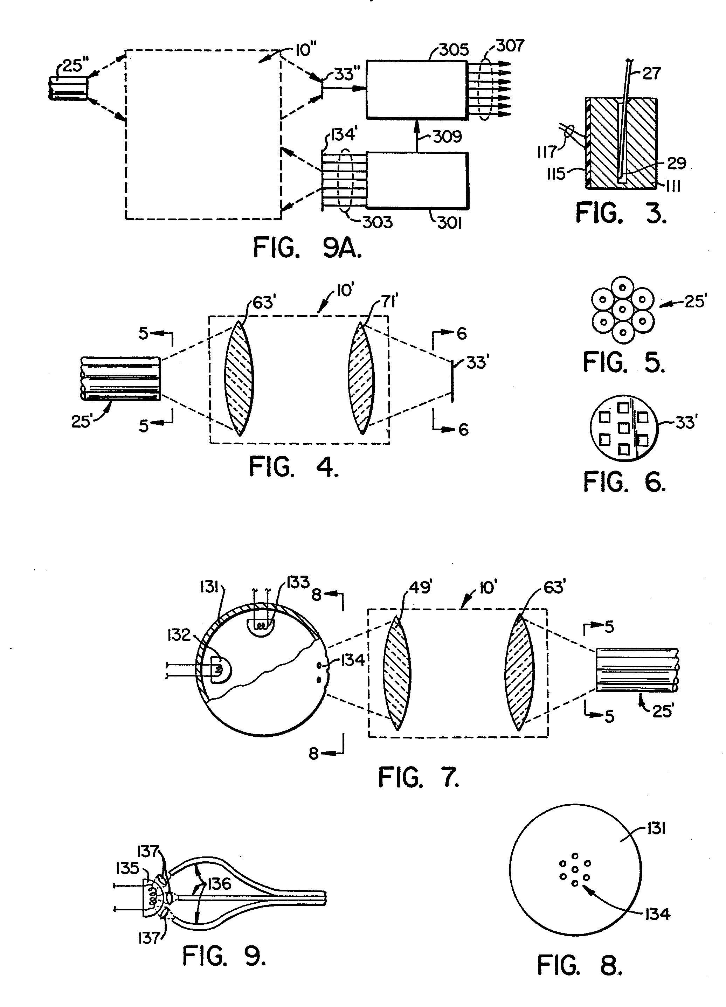

Separate standard temperature wells 111 and 112 are schematically illustrated in Figure 2, their identical construction being shown in Figure 3 by a sectional view of the well 111. The well 111 is preferably made of a heat conductive material, such as aluminum, and is of sufficient mass to have considerable thermal inertia. A small hole drilled into the metal is used to receive the temperature sensor 29 which, through the instrument, then reads the temperature within the well 111. On the side of the well 111, is a semiconductor device 115 installed in a groove provided in the metal. The device 115 allows a signal to be developed in the circuit 117 that is proportional to the temperature of the well 111, and thus of the phosphor temperature sensor 29 positioned in it. The signal in the circuit 117 is amplified by an amplifier 119 and applied by a circuit 100 as a third input to the multiplexer 95. Similarly, the well 112 has a temperature measuring semiconductor element 116 which is connected by a circuit 118 to an amplifier 120, and thence through a circuit 101 to the multiplexer 95 as a fourth input.

The temperature wells 111 and 112 are utilized for calibrating the instrument. By developing an electrical signal proportional to its temperature, the system can automatically calibrate itself. In order to maintain the two standard temperature wells 111 and 112 at different temperatures, the well 111 is placed in close proximity, and preferably in contact with, the thermally conductive block 17. This will maintain the well 111 at an elevated temperature. The reference temperature well 112 is positioned within the instrument a distance removed from the block 17 and is maintained at a cooler temperature, nearer to the room ambient temperature. For medical temperature measuring applications, the temperatures of the two wells can be set near the extremes of temperatures to be measured, thus facilitating a two point calibration technique described below.

The multiplexer 95 (Figure 2) selects one of the four inputs at a time under the control of the microprocessor 91. The selected input is then converted from its analog form to a digital form by a converter 105. The output, in digital form, of the analog-to-digital converter 105 is utilized by the microprocessor 91 as an input data from which the temperature of the sensor 29 is determined and the instrument is calibrated. The microprocessor 91 operates under the control of a read only memory 107. An electrically erasable read-only-memory (EEROM) 108 is used to store a temperature look-up table, described below. Output circuits 109 receive the processed information from the microprocessor 91 and include the output in the form desired for any particular application. Most commonly, there would be a display so that the user of the instrument can read the temperature of the sensor. The temperature information in digital form could also, or alternatively, be applied to other digital processing equipment. The output circuits 109 could also, or alternatively, include a digital-to-analog converter for driving a chart recorder. A keyboard 110 is provided for inputing information and commands to the system.

So far in this description, an instrument capable of measuring one temperature at a time through a single temperature sensor 29 has been described. Referring to Figures 4-9, techniques for adapting the instrument to measure multiple temperatures is shown. Rather than the single optical fiber input 25 of Figure 2, Figures 4-6 show a modification wherein a plurality of optical fiber ends 25' are utilized, each carrying an independent optical signal. In this example, six optical fibers are closely packed around a central core fiber, all of them having the same cross-sectional dimensions. Each of these fibers is optically coupled at its opposite end (not shown) to a phosphor temperature sensor of the type described previously. Each temperature sensor may be positioned at a unique place in an object that is monitored, or on different objects. The independent optical signals from each sensor are then imaged by an optical system 10' onto a detector surface 33'. The optical system 10' can be made essentially the same as the optical system 10 described previously with respect to Figures 1 and 2. The closely grouped optical fibers are positioned at the optical axis of the system 10' in order to avoid distortion and aberrations. A small, compact image located at the optical axis of various optical element means that these elements can be made inexpensively.

The detector surface 33' preferably has an integrated multi-detector element positioned coincident with it, this element being shown in Figure 6. Seven independent detectors are arranged so that each receives the light from one of the optical fibers 25'. The electrical signals generated are processed in the same manner discussed previously, either at the same time with parallel paths of equipment or, preferably, one at a time in rapid sequence by a common microprocessor based system of the type shown in Figure 2.

Alternative to an integrated detector element shown in Figure 6, a bundle of optical fibers in the shape of the fibers 25' shown in Figure 5 can be positioned at the surface 33' in place of the integrated detector to receive each of the individual signals. An opposite end of each optical fiber could then contain a discrete detector component. The fibers are fanned out from the small small bundle where it receives the image, to their ends containing the detectors. This structure has the advantage of giving more room for the detectors while still maintaining a very small optical image of the array of signals.

The optical fibers 25' can be fanned out and each connected individually to a length of optical fiber with a temperature sensor on its end. That is, each of the optical fibers of the bundle 25' would have an individual connector. Alternatively, a single connector could be utilized for all of the fibers with the fibers then fanning out outside of the optical instrument into the individual fibers with temperature sensors on their ends. In either case, the temperature sensing phosphor need not be physically attached to the fiber, but rather can be attached to another object, with its emissions coupled into its associated optical fiber. A liquid fluorescent dye can alternatively be used.

There is a significant advantage of the small, bundled optical fiber arrangement shown in Figures 4-6 when used with the intensity ratio type of temperature measurement for which the instrument embodiment of Figures 1 and 2 has been described. The optics 10' include everything shown in the optical system 10 of Figure 2, including the excitation source and the splitting of the luminescent lines onto two detector arrays of the type shown in Figure 6 for detecting the intensity of the same two lines of luminescence from each of the sensors in the manner that they may be compared for determining the temperature of the sensor.

Similarly to Figures 4-6 illustrating the coupling of multiple optical fibers in a bundle 25' to a plurality of detectors 33, Figures 7 and 8 show an advantageous way to couple an excitation radiation source into the fiber bundle 25'. A sphere 131 contains two light sources 132 and 133 and is enclosed except for an array of holes 134 that are arranged to match the pattern of optical fibers 25' into which light is to be imaged. An interior surface of the sphere 131 is made to have a high degree of light diffusion and is non-absorptive so that an even high intensity is presented at the apertures 134. By having two light sources 132 and 133, the failure of one source will not cripple operation of the instrument, although only one source is required for operation at any one time. The light sources can be of any convenient type, incandescent, gas discharge, light emitting diode (LED), etc. The use of the integrating sphere 131 makes efficient use of virtually any available light source for even, efficient distribution in a pattern which matches the optical fiber pattern.

When the systems of Figures 4-8 are used together, each of the optical fibers 25' carry both the excitation radiation to its associated phosphor sensor and the luminescent radiation from the sensor to the optical system 10'. If separate fibers are provided for the excitation and emission communication with each sensor, a more conventional fiber illumination arrangement, such as shown in Figure 9, can be used. A light source 135 can be positioned directly in front of excitation fibers 136, but it is preferable to interpose lenses 137 therebetween to maximize light efficiency.

In any of the specific optical fiber arrangements described, one or two fibers of each bundle may be used for continuous calibration, if desired. An end of any such calibration fiber carrying the phosphor probe can be left in one of the temperature wells 111 or 112. It a second calibration fiber of a bundle is employed, its sensor can be placed in the other well. The instrument can then be calibrated according to the techniques discussed below.

An alternative source arrangement includes attaching separate sources, such as LED's, to the ends of a plurality of short fibers. The other fiber ends are then bundled to provide the desired source intensity pattern that can be substituted for the pattern of apertures 134 in the system of Figure 7. Yet a different source is a multi-segment LED whose segments directly produce the desired source pattern shown in Figure 8, the LED segments forming a pattern that corresponds to that of the holes 134. The LED pattern is then imaged directly onto the fiber bundle 25' (Figure 7), one segment per fiber, taking the place of the sphere 131.

In either of these two specific LED arrangements, the opportunity for electrical modulation of the excitation source or sources is available. This facilitates sophisticated detection schemes at the detectors, such as synchronous or lock-in detection, phase angle measurement between excitation and sensor, etc. An example of such a system is shown in Figure 9A. With appropriately chosen different modulation of each of the individual source elements by a modulator 301 having individual energization circuits 303 connected to specific light elements (that make up the source 134') for each sensor fiber or fibers, it is possible to substitute a single element detector 33" for the multi-detector array 33' (Figures 4 and 6) and still obtain independent information for each sensor. In this case, all of the fibers 25" are imaged onto the detector element 33". An optical system 10" interconnects the sensor fibers, excitation source and detector. A single electronic signal output of the detector 33" is demodulated by a circuit 305 into individual signals in lines 307 corresponding to the optical signals of the various sensors. For certain modulation/demodulation techniques, but not all, a linking circuit 309 will be provided for synchronization of the circuits 301 and 305.

One such modulation technique is to modulate each excitation LED at a unique frequency and then electrically or digitally analize the output of the single common detector to recover the various signals corresponding to each sensor. If the source modulation frequencies are not harmonically related (that is, no one frequency is an integer multiple of another), then lock-in synchronous detection, either electrical or digital, provides an efficient means of separating the detected detection scheme using a single detector and multiple excitation LED's is to pulse each LED or LED segment to emission at a separate time and assign the response at the common detector to the sensor which has been excited.

As described in the aforementioned patents of Wickersheim, the ratio temperature sensing technique eliminates as a concern many causes of error that occur over time due to changes in the optical or electronic system. From either of Figures 1 or 2, it will be noticed that at the dichroic mirror 67, the two optical wavelength signal paths separate from a common path that has originated in the temperature sensor 29. From the sensor 29 to the element 67, optical changes with time usually have little effect upon the temperature reading because of the ratioing technique. Only changes that affect the two wavelengths to different degrees will cause drift. Even changes in the source intensity which necessarily occurs after operating the lamp 31, will have little if any effect on the ultimate temperature reading. But, once the two optical signals have been separated from one another, any changes in one signal path (elements 69 and 71) which are not duplicated in the other signal path (elements 73, 75 and 77) can cause errors in the temperature readings.

It is extremely difficult to manufacture batches of optical temperature sensors 29 that have identical temperature characteristics to within a high degree of accuracy. As an example of one particular application wherein temperature sensors are desired to be interchanged in a common instrument, such as where they are disposable, as in medical applications. For monitoring temperature of a patient during hyperthermia cancer treatment, for example, a sensor needs to be accurate within about 0.1°C within a range of approximately 37°C-50°C. It turns out that a ratio of the intensity of the phosphor lines around 5860 Angstroms to that of lines around 7043 Angstroms in a europium-doped lanthanum oxysulfide is substantially linear over that range. This characteristic makes the use of these particular lines highly advantageous because of the ease of calibrating the instrument when temperature sensing probes are changed. Several other sets of emission lines also give such linear characteristic in the biomedical temperature range, both with this and other phosphor materials.

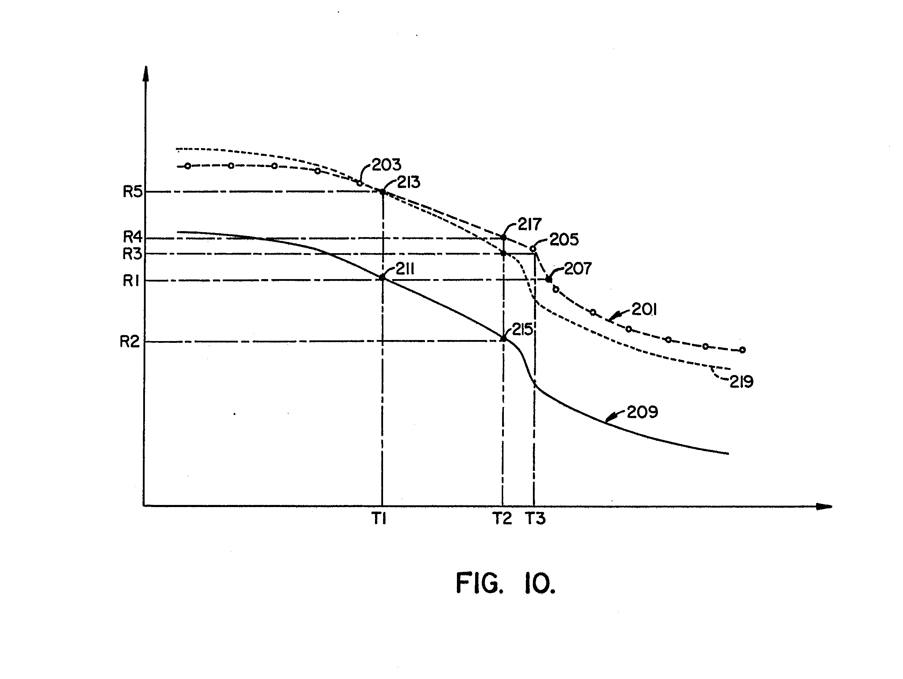

Referring to Figure 10, such a curve 201 is shown. Individual values on that curve are stored in the ROM 107. Stored points 203 and 205 are a substantial distance apart along a linear portion of the curve 201. Other stored points are closer together in regions where the characteristic curve 201 changes more rapidly. It is a ratio of the signal inputs to the multiplexer 95 (Figure 2) from the variable gain amplifiers 93 and 99 that is compared against a look-up table in the ROM 107 containing all of the points 203, 205, etc. of the curve 201. The microprocessor 91 linearly interpolates the temperature between these points. The curve 201 is determined as typical for a certain type of phosphor sensor 29 but each manufactured sensor will vary somewhat. The curve 219 represents the curve of a particular sensor with its deviation from the general curve 201 shown exaggerated for clarity. It is thus important that a calibration procedure be provided that is easy to accomplish each time a new temperature sensor is connected to the instrument.

A calibration technique utilizing the stored data points of the curve 201 will now be explained. The first step is to immerse the sensor 29 (Figure 2) into a stable reference bath whose temperature is known. If this bath is external to the instrument, its temperature is then inputed to the microprocessor system through the keyboard 110. Alternatively, the internal temperature wells could be used, and for this first calibration step the sensor 29 is positioned within the well 112 that is the cooler of the two wells 111 and 112. A first adjustment step is with the amplifiers 93 and 99 to make sure that their signal outputs are within the operable range of the analog-to-digital converter 105. This adjustment may be done manually or, preferably, automatically under the control of microprocessor 91.

Referring to Figure 10, assume that the sensor 29 is known to be at temperature T1. Assume also that the gains of the amplifiers 93 and 99 have been set which results in generation of a ratio signal acted upon by the microprocessor 91 that is equal to R1. If the look-up table representing the curve 201 is utilized with that ratio signal, it will at point 207 of the curve 201 give an erroneous temperature reading. The actual sensor characteristics are represented by curve 209 which is shifted from the curve 201 by a factor for which is the ratio of the observed ratio R1 to the stored ratio R5. Therefore, in order to correct the signals to fit the sensor characteristic to the stored table of curve 201, the input signals are multiplied by a factor R5/R1 before the temperature is derived from the curve 201. This effectively brings the actual characteristic curve 209 into coincidence with the stored curve 201 at the calibration temperature T1, as shown by curve 219. This correction factor R5/R1 is stored in the EEROM 108.

What has been described so far is the calibration of the instrument at a single point. If the characteristics of the temperature sensors are somewhat different at other temperatures, one or more additional calibrations at different temperatures is desirable, depending upon the degree of accuracy that is required. As an example of the type of error that can exist even after calibration at a single point, consider a ratio R2 obtained from the temperature sensor 29 being maintained at a second calibration temperature T2. If the correction R5/R1 only is applied, the temperature measured by the instrument of Figure 2 would be T3, from the curve 219. This small error can be eliminated by calculating a new correction factor R4/R3. Thus, the incoming signal level R2 is first multiplied by the ratio R5/R1, yielding R3, and then by the smaller correction R4/R3 to yield R4. The signal R4 is then used to interrogate the look-up table corresponding to curve 201. The second correction factor R4/R3 is also stored in EEROM 108.

It is preferred that the temperatures T1 and T2 at which the instrument is calibrated be chosen toward the extremes of the linear portion of the curve 201 between the points 203 and 205. This makes the instrument extremely accurate in this linear region. At temperatures lower than the lowest calibrated temperature T1, the factor R5/R1 is applied directly. And for temperatures above the higher calibrated temperature T2, two factors R5/R1 and R4/R3 are applied directly. But between these two temperatures the factor that is used to correct the ratio signal before interrogating the stored curve 201 is linearly interpolated between these extremes.

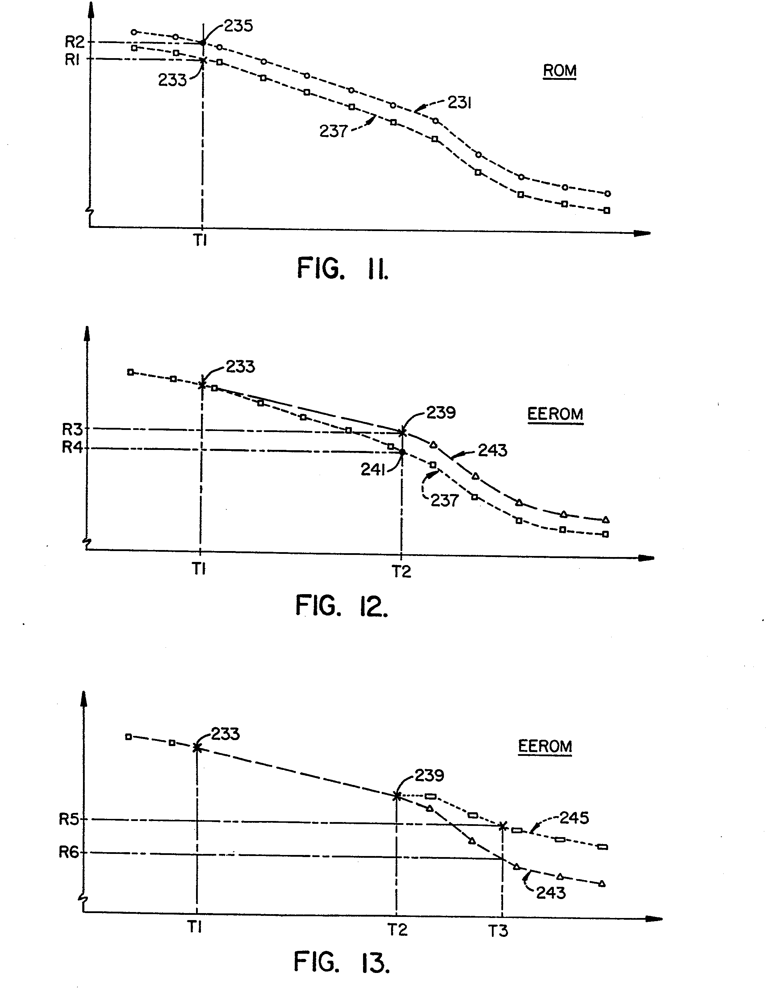

An alternative calibration technique is illustrated with respect to Figures 11, 12 and 13. This technique differs from that described with respect to Figure 10 in that the look-up table is adjusted for each sensor while the incoming signals are not. Referring initially to Figure 11, the ROM 107 (Figure 2) stores a look-up table of the points shown as curve 231. The temperature sensor is held at a first known temperature T1. Assume for this example that the electrical ratio signal developed in the instrument is R1 (point 233 on Figure 11). But in order to obtain a correct temperature indication, the ratio signal magnitude should be at R2 (point 235). Recall that the microprocessor 91 linearly interpolates between recorded points on the curve 231. To obtain a corrected table for this sensor, each point of curve 231 is multiplied by the factor R1/R2, with the resulting new points, shown as curve 237, being stored in the EEROM 108 (Figure 2). When in use, it is the corrected curve 237 from which temperature indications are obtained for intensity ratio signals.

This single point calibration may be adequate for many types of sensors and particular applications. But a better calibration is often desired, so a similar procedure is performed at a second temperature T2, as illustrated in Figure 12. In this case, an actual ratio signal R3 (point 239) is obtained from the sensor, which is above a value R4 (point 241) that would erroneously be obtained from curve 237. Therefore, points for yet another curve 243 are calculated in the following manner. For points of the curve 237 higher than temperature T2 (that is, on the opposite side of T2 from T1), they are multiplied by a ratio R3/R4 to form new points of the curve 243. For positions in between temperatures T1 and T2, this ratio is linearly adjusted so that it is zero for points at T1 and a maximum at T2. However, a further shortcut is possible when the characteristic curves are linear between known calibration temperatures T1 and T2; no points are provided as part of curve 243 so that the linear interpolation of the microprocessor between points 233 and 239 effects the desired linearity, as shown in Figure 12. The curve 243 replaces the curve 237 at temperatures higher than T1, for use as the look-up table during actual temperature measurements.

The calibration techniques described with respect to Figures 11 and 12 are general in nature and can be repeated at additional known temperatures in order to even better conform the look-up table to the characteristics of a particular sensor. Figure 13 shows a third calibration at a known temperature T3 in order to replace the values of curve 243 in the look-up table at temperatures in excess of T2. The points on the curve 243 in excess of T3 are multiplied by a ratio R5/R6 to obtain points for curve 245. The points on the curve 243 between temperatures T2 and T3 are multiplied by a linearly proportional amount of the factor R5/R6 in determining points on the curve 245 in this region.

The calibration techniques described with respect to Figures 10-13, although given for a luminescense ratioing temperature measuring system, are equally useful with non-ratioed quantities and with decay time temperature measurement techniques where the quantity on the vertical axes of these curves is related to decay time instead of luminescence intensity. These techniques are also equally useful for measuring other conditions besides temperature, such as pressure, flow, stress, strain, etc.

Although the various aspects of the present invention have been described with respect to a particular optical temperature sensing technique and specific instrument implementation, it will be understood that the invention is entitled to protection within the full scope of the appended claims. Many variations and generalizations of the specific techniques described with respect to the drawings are possible. For example, the referencing and calibration techniques described are useful even where ratioing is not employed and, in fact, are essential in those applications since no part of certain degradation over time is automatically corrected. Also, the referencing and calibration devices and techniques are useful in instruments that employ other phosphor temperature dependent characteristics, such as in line wavelength shift or decay time techniques. Various other types of phosphors may be substituted for those described in the examples, and other non-phosphor temperature sensing materials that change some detectable optical characteristics can also benefit from the techniques of this invention. Further, the techniques described also have application to acquisition and processing of optical signals obtained form measurement transducers other than temperature, such as pressure, flow, stress, stain and similar other parameters.

CLAIMS

1. In an optical condition measuring system adapted to provide a separate condition indication from each of plurality of optical signals separately carried by an optical fiber from one end to another end thereof, an improved optical signal processing system, comprising:

means grouping closely together said another end of said plurality of optical fibers into a given pattern, for emitting their light signals in said pattern,

an array of light detectors arranged substantially in said given pattern for a separate detector to receive the light from said another end of a different one of said optical fibers, and

a signal receiving optical system positioned to image onto said array of detectors through at least one common optical element the grouped light signals from said another end of said optical fibers.

2. The improved optical conditioning measuring system according to claim 1 wherein said detector array includes a plurality of separate discrete detector components, each with a segment of detector optical fiber having one end positioned at said detector and said another end positioned in a group with all others at a location to receive through the optical system an image of the light signals to be detected.

3. The improved optical condition measuring system according to claim 1 wherein said array of detectors comprises said individual detectors being arranged at a surface wherein said optical system forms an image of the closely grouped light signals.

4. The improved optical condition measuring system according to claim 1 wherein said optical system includes means for simultaneously directing electromagnetic radiation into said another end of each of the plurality of optical fibers whereby said electromagnetic radiation is communicated to said one end of each of the optical fibers.

5. The improved optical condition measuring system according to claim 1, additionally having an illumination source comprising:

a light source having useful intensity levels in substantially said given pattern, and

a light transmitting optical system positioned to image into said another end of the optical fibers through at least one common optical element the plurality of light chamber apertures, whereby light from said source is communicated to said one end of each of said optical fibers.

6. The improved optical condition measuring system according to claim 5 wherein said light source comprises a light enclosed chamber having one or more illumination elements therein, a diffusely reflective inner surface and a plurality of apertures arranged in substantially said given pattern.

7. The improved optical condition measuring system according to claim 5 wherein said at least one common optical element of each of said signal receiving optical system and said light transmitting optical signal comprises at least one optical element common to both systems.

8.  A light illumination system, comprising:

a light enclosed chamber having a light source therein, a diffusely reflective inner surface and a plurality of small apertures arranged in a given pattern,

a bundle of optical fibers equal in number to the number of said apertures and terminating with their ends arranged substantially on said given pattern, and

optical means disposed between said chamber and said optical fiber ends for imaging said apertures into said optical fiber ends, thereby to cause light to enter each optical fiber and travel along its length.

9.  In an optical condition measuring system adapted to provide a separate condition indication from a plurality of sensors that are each characterized by being activated with excitation radiation to emit an optical signal related to the condition being measured, the improvement comprising:

means including an independently controllable excitation radiation source for activating each sensor,

means providing optical communication between each sensor and one end of at least one distinct optical fiber, thereby to communicate the optical signal from each sensor along at least one unique optical fiber to its other end,

a light detector characterized by emitting a single electronic signal,

optical means for simultaneously directing said light signals from all of said other ends of the optical fibers onto said detector, and

cooperative electronic means connected with said sensor activating means and with said detector single electronic signal for activating each of said sensors in a manner that a signal proportional to each optical signal is extracted from the detector electronic signal.

10. In an optical condition measuring instrument adapted to receive from a condition sensor an optical signal having a magnitude related to the condition being monitored, wherein the optical signal is converted to an electrical one and the desired condition is determined from a fixed table containing values representative of a relationship between a characteristic of the electrical signal and a magnitude of said condition, the improvement comprising:

means responsive to said fixed table values and those obtained from said sensor when subjected to a plurality of known condition calibration magnitudes spread over a condition measuring range of interest for generating and storing a corresponding number of correction signals, and

means receiving an actual condition magnitude signal for adjusting said magnitude in accordance with said correction signals before determining the condition value from said fixed table.

11. In an optical condition measuring instrument adapted to receive from a condition sensor an optical signal having a magnitude related to the condition being monitored, wherein the optical signal is converted to an electrical one and the desired condition is determined from a fixed table, containing values representative of a relationship between a characteristic of the electrical signal and a magnitude of said condition, an improved method of calibrating and using said instrument, comprising the steps of:

(a) subjecting the sensor to a first known condition calibration magnitude,

(b) measuring the electrical signal characteristic while said sensor is held at said first known condition magnitude,

(c) determining from said fixed table what a proper electrical signal magnitude is for the first known condition magnitude,

(d) calculating a first correction factor from the actual and proper electrical signal characteristic,

(e) repeating steps (a) through (d) for a second known condition calibration magnitude, thereby calculating a second correction factor,

(f) holding the sensor at an unknown condition magnitude desired to be determined, thereby developing an actual electrical signal, and

(g) correcting the actual electrical signal in the following manner:

(1) if said signal is in between that for the first and second calibration condition magnitudes, a correction factor linearly interpolated between the first and second correction factors is applied to said actual signal to form a corrected signal, or

(2) if said signal is in excess of that for the higher of the first and second calibration magnitudes, the correction factor at the higher condition magnitude is applied to the actual electrical signal to obtain a corrected electrical signal,

whereby a corrected condition magnitude may be obtained from the corrected electrical signal.

12. In an optical condition measuring instrument adapted to receive from a condition sensor an optical signal having a magnitude related to the condition being monitored, wherein the optical signal is converted to an electrical one and the desired condition is determined from a fixed table containing values representative of a relationship between a characteristic of the electrical signal and a magnitude of said condition, the improvement comprising:

means responsive to signal magnitude when subjected to a plurality of known condition calibration magnitudes spread over a condition measuring range of interest for calculating adjusted values from said fixed table and storing an adjusted table for a particular condition sensor, and

means receiving an actual condition magnitude signal from said particular condition sensor for comparison with said adjusted table in order to determine the value of said condition.

13. In an optical condition measuring instrument adapted to receive from a condition sensor an optical signal having a magnitude related to the condition being monitored, wherein the optical signal is converted to an electrical one and the desired condition is determined from a fixed table giving the correspondence between a characteristic of the electrical signal and a magnitude of said condition, an improved method of calibrating and using said instrument, comprising the steps of:

(a) subjecting the sensor to a first know condition calibration magnitude,

(b) measuring the electric signal characteristic while said sensor is held at said first known condition magnitude,

(c) determining from said fixed table its recorded electrical signal magnitude is for the first known condition magnitude,

(d) calculating a first correction factor from the actual and fixed table recorded electrical signal magnitude,

(e) deriving a first adjusted table from the fixed table by use of the first correction factor,

(f) holding the sensor at a second known condition calibration magnitude,

(g) measuring the electrical signal characteristic while said sensor is held at said second know condition,

(h) determining from said first adjusted table its recorded electrical signal magnitude for the second known temperature,

(i) calculating a second correction factor from the actual and first adjusted table electrical signal magnitude, and

(j) deriving a second adjusted table from the first adjusted table by use of the second correction factor, whereby the second adjusted table is utilized to determine the actual condition magnitude to which the sensor is being subjected.

FIG. I.

2/5

FIG. 2.

FIG. 9A.

FIG. 3.

FIG. 4.

FIG. 5.

FIG. 6.

FIG. 7.

FIG. 9.

FIG. 8.

FIG. 10.

5/5

ROM

FIG. 11.

EEROM

FIG. 12.

EEROM

FIG. 13.

0092047